# EUROPÄISCHE PATENTSCHRIFT

(11) **EP 1 081 044 B1**
(45) Veröffentlichungstag und Bekanntmachung des Hinweises auf die Patenterteilung: **26.02.2003**
(21) Anmeldenummer: 00118552.9
(22) Anmeldetag: 26.08.2000
(51) Int. Cl.: B64F 1/22

(54) **Schleppfahrzeug ohne Schleppstange zum bugsieren von Flugzeugen**
Towbarless towing truck for aircraft
Véhicule de remorquage sans barre pour avions

(30) Priorität: 04.09.1999 DE 19942261
(43) Veröffentlichungstag der Anmeldung: 07.03.2001
(73) Patentinhaber: GHH Fahrzeuge GmbH, 46145 Oberhausen (DE)
(72) Erfinder: Kretschmann, Ernest, 46149 Oberhausen (DE); Michaelsen, Lars-Torsten, 58313 Herdecke (DE); Franken, Wilhelm, 46487 Wesel (DE); Weigardt, Gerhard, 46147 Oberhausen (DE); Gensty, Frank, 59399 Olfen (DE)

(56) Entgegenhaltungen:
- EP-B- 0 530 456
- DE-A- 4 131 649
- DE-A- 4 322 985
- DE-C- 3 732 644

## Beschreibung

Die Erfindung betrifft ein Schleppfahrzeug mit Räderfahrgestell und eigenem Fahrantrieb zum Bugsieren eines Flugzeuges ohne Schleppstange, wobei das Fahrzeug eine offene U-förmige Ausnehmung aufweist mit einer darin pendelnd angeordneten Einspann- und Aufnahmevorrichtung für das Bugfahrwerk eines Flugzeuges, wobei an einem über ein Pendellager an einer Quertraverse des Fahrgestellrahmens gelagerten Träger, eine Aufnahmevorrichtung angeordnet ist, wobei an der Aufnahmevorrichtung zum Verspannen der Bugräder des Bugfahrwerkes zueinander parallele Teleskoparme mit Teleskopzylindern und an ihren Spitzen einschwenkbar angelenkte Greifarme befestigt sind und zum Schwenken der Aufnahmevorrichtung parallel zueinander Schwenkzylinder angeordnet sind.

Stangenlose Flugzeugschlepper zum Bugsieren von Flugzeugen auf Flugplätzen sind seit Mitte der 80er Jahre bekannt. Sie werden sowohl für das Push-back, für Schleppmanöver in Flugzeugwerften und in Hallen, ferner auch als Schleppfahrzeuge für längere Fahrstrecken innerhalb eines Flughafengeländes verwendet.

Ein stangenloser Flugzeugschlepper mit allen Merkmalen des Oberbegriffs des unabhängigen Anspruchs ist aus EP 0 530 456 B1 bekannt. Er wird vorwiegend für den sogenannten Push-back-Betrieb benutzt und weist eine hydraulisch betätigte Bugfahrwerk-Anhebevorrichtung auf, die aus einer Schwenk-Hub-Rampe mit einer Bugradeinspannvorrichtung mit Teleskoparmen und schwenkbaren Greifarmen besteht. Die gesamte Einspann- und Hubvorrichtung ist über ein einziges Drehlager am Flugzeugschlepperfahrgestell angelenkt, so dass ein sicherer Ausgleich bei Kurvenfahrten und bei Bodenunebenheiten gewährleistet ist.

Das Einspannen der Bugräder des Flugzeuges findet hier vor dem Aufnahmevorgang statt, d.h. bevor die Bugräder auf der Plattform stehen. Die Einspannkräfte, die auf die Bugräder wirken, werden während des gesamten Aufnahme- und Hubvorganges konstant aufrechterhalten, so dass die Bugräder während dieses Vorgangs nicht aus der Verklammerung zwischen Greifarmen und Schwenk-Hub-Rampe abrutschen können.

Der stangenlose Flugzeugschlepper zur Aufnahme von sehr hohen Bugradlasten und zur Durchführung jedweder Flugzeugbewegung auf einem Flughafengelände nach der DE 43 22 985 C2 weist eine sogenannte Pendeltraverse auf, die über Schwenklager mit einem Pendelbolzen und mit einer Quertraverse verbunden ist.

Die Plattform der Bugradaufnahmevorrichtung ist mit Schwenklagern an der Pendeltraverse und über Gelenklager von Längslenkern mit dem Fahrgestell-Vorderteil verbunden.

Bei dem Flugzeugschlepper nach der DE 43 22 985 C2 besteht, nachdem die Bugräder auf der Plattform stehen, eine feste Einspannung derselben, die während des gesamten Aufnahmevorgang des Bugfahrwerkes als feste Verbindung zwischen Bugrädern und Kinematik aufrechterhalten wird. Somit findet hier eine geführte Bugradaufnahme statt.

Es hat sich gezeigt, dass es bei der Aufnahme von Flugzeugen zu Störungen kommen kann, wenn das Vorfeld, auf dem der Flugzeugschlepper operiert, Unebenheiten aufweist.

Beim konventionellen Aufnahmevorgang fährt der Flugzeugschlepper mit seiner Aufnahmeplattform vor die Bugräder, wobei sich die Aufnahmeplattform knapp über dem Boden des Vorfeldes befindet. Während des Aufnahmevorganges der Bugräder mit Hilfe der Teleskoparme und der an diesen angeordneten Greifarmen wird die Aufnahmeplattform gleichzeitig unter die Bugräder geschoben.

Sofern sich auf dem Vorfeld Vertiefungen oder Erhöhungen befinden, kann es deswegen zu Störungen kommen, weil die Aufnahmeplattform bei Vorfeldvertiefungen in einem zu hohen Bereich der Bugräder angreift bzw. im anderen Fall an einer Erhöhung des Vorfeldes hängen bleibt.

Bei den stangenlosen Flugzeugschleppern des Standes der Technik kommt es also bei der Aufnahme der Bugräder durch die Einfederung (z.B. bis zu 80 mm) der Flugzeugschlepper-Reifen zu einer Absenkung der Aufnahmeplattform,
gegebenenfalls bis zum Boden des Vorfeldes. Daher muss bei den Flugzeugschleppern des Standes der Technik mit einer besonderen Abstandsregelung die Aufnahmeplattform auf einer Mindestabstandshöhe gehalten werden.

Aufgabe der Erfindung ist es, stangenlose Flugzeugschlepper des Standes der Technik dahingehend zu verbessern, dass es mit diesen Schleppern gelingt, Bugfahrwerke unabhängig von der Vorfeldbeschaffenheit störungsfrei aufzunehmen und dies insbesondere, wenn von dem Flugzeugschlepper sehr hohe Bugradlasten (von z.B. 50 t) aufgenommen werden sollen und die Flugzeuge mit hohen Geschwindigkeiten (über 30 km/h) über große Entfernungen geschleppt werden müssen.

Diese Aufgabe löst die Erfindung in der Weise, wie es der Patentanspruch angibt.

Bei dem erfindungsgemäßen Flugzeugschlepper werden zunächst die Bugräder zwischen Greifern und einer Aufnahmefläche der Aufnahmekinematik fest eingespannt, wobei allerdings kein gleichzeitiges Aufschieben der Bugräder auf die Aufnahmeplattform (wie z.B. nach der EP 0 530 456 B1) stattfindet.

Nach dem neuen Vorschlag werden nach dem Einspannen der Bugräder diese mit Hilfe einer Hubkinematik in Form eines Parallelogramms durch Aufnahmezylinder über Lenker über die Aufnahmeplattform geschwenkt und durch die Hubzylinder auf die Aufnahmeplattform aufgesetzt.

Die Aufnahmeplattform weist ständig einen so großen Abstand vom Boden des Vorfeldes auf, dass es zu keiner Berührung der Aufnahmekinematik und der Aufnahmeplattform des Flugzeugschleppers mit dem Boden des Vorfeldes kommen kann.

Eine spezielle Abstandsregelung, mit der die Aufnahmeplattform auf einer Mindestabstandshöhe gegenüber dem Vorfeld gehalten wird, ist bei dem erfindungsgemäßen Flugzeugschlepper nicht erforderlich.

Nachdem die Bugräder fest eingespannt und mit Hilfe der Aufnahmezylinder auf die Aufnahmeplattform aufgesetzt sind, erfolgt durch die Schwenkzylinder in an sich bekannter Weise das Schwenken der Aufnahmeplattform mit den dort aufstehenden Bugrädern in die Transportstellung.

Die angestrebte Verbesserung des Bugfahrwerk-Aufnahmevorganges geschieht also durch das Anheben der Bugräder auf die Aufnahmeplattform zu einem Zeitpunkt, nachdem die feste Einspannung der Bugräder durchgeführt ist und bevor das Schwenken der Aufnahmevorrichtung stattgefunden hat.

Die Erfindung wird nachstehend anhand von schematischen Zeichnungen näher erläutert.

Es zeigen
- Fig. 1: eine Schnittdarstellung des Flugzeugschlepper-Hinterteils während des Einspannens der Bugräder,
- Fig. 2: eine Schnittdarstellung des Flugzeugschlepper-Hinterteils nachdem die Bugräder über die Aufnahmeplattform geschwenkt wurden,
- Fig. 3: eine Schnittdarstellung des Flugzeugschlepper-Hinterteils nach dem Schwenken der Aufnahmeplattform und
- Fig. 4: eine Draufsicht auf den kompletten Flugzeugschlepper.

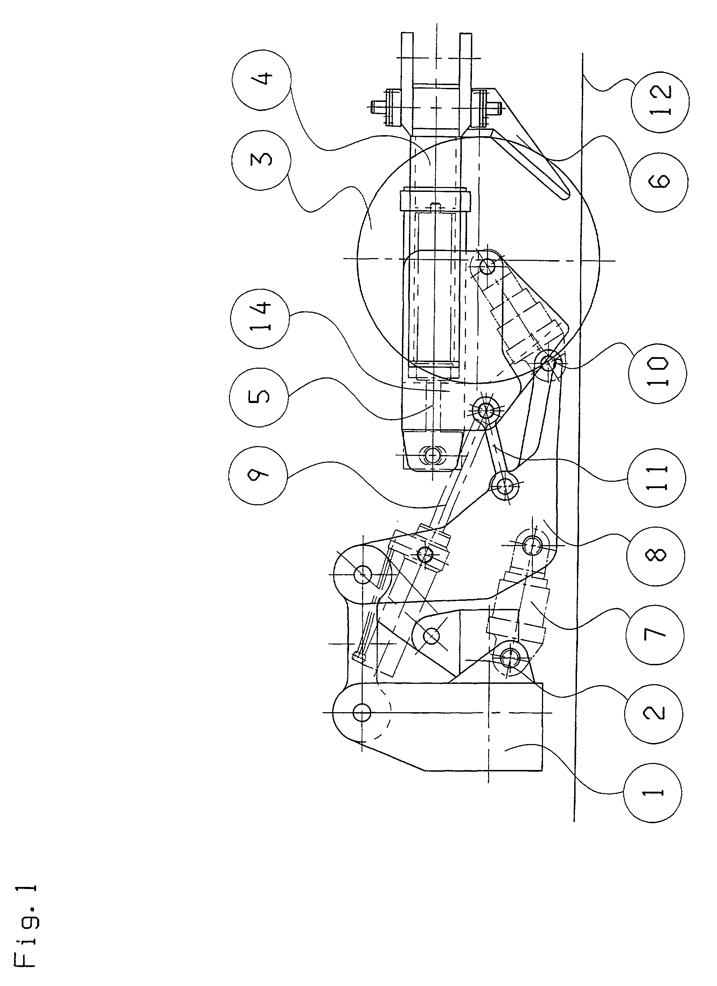

Entsprechend Fig. 1 befinden sich die Bugräder (3), noch auf dem Vorfeld (12) stehend, vor der abgesenkten Aufnahmeplattform (8) und der Aufnahmefläche der Aufnahmekinematik (14) des Flugzeugschleppers. Die Teleskoparme (4) mit den Teleskopzylindern (5) und den Greifarmen (6) befinden sich in horizontaler Lage, wobei die Greifarme (6) nach innen eingeschwenkt sind und die Bugräder (3) einspannen.

Die Aufnahmefläche der Aufnahmekinematik (14), die sich in geringem Abstand über dem Vorfeld (12) befindet, berührt mit ihrer Vorderkante die Bugräder (3).

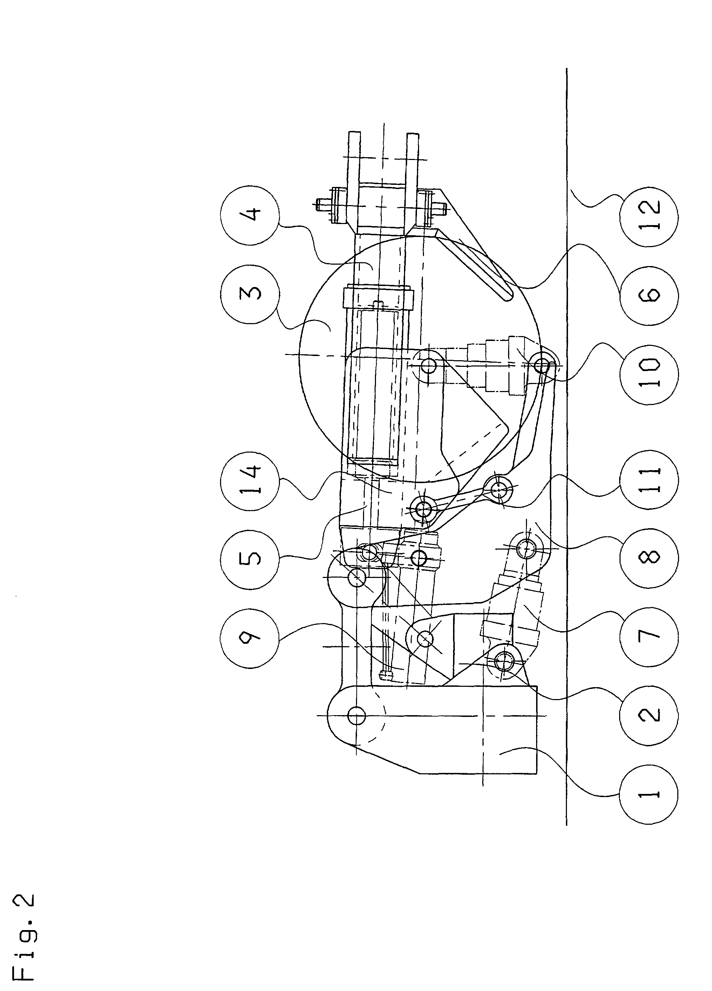

Fig. 2 zeigt die Situation, bei der die eingespannten Bugräder (3) über die Aufnahmeplattform (8) geschwenkt wurden. Dieser Vorgang wird durch die als Parallelogramm gestaltete Hubkinematik bewirkt, die aus den beiden Aufnahmezylindern (9), den beiden Hubzylindern (10) und den Lenkern (11) besteht.

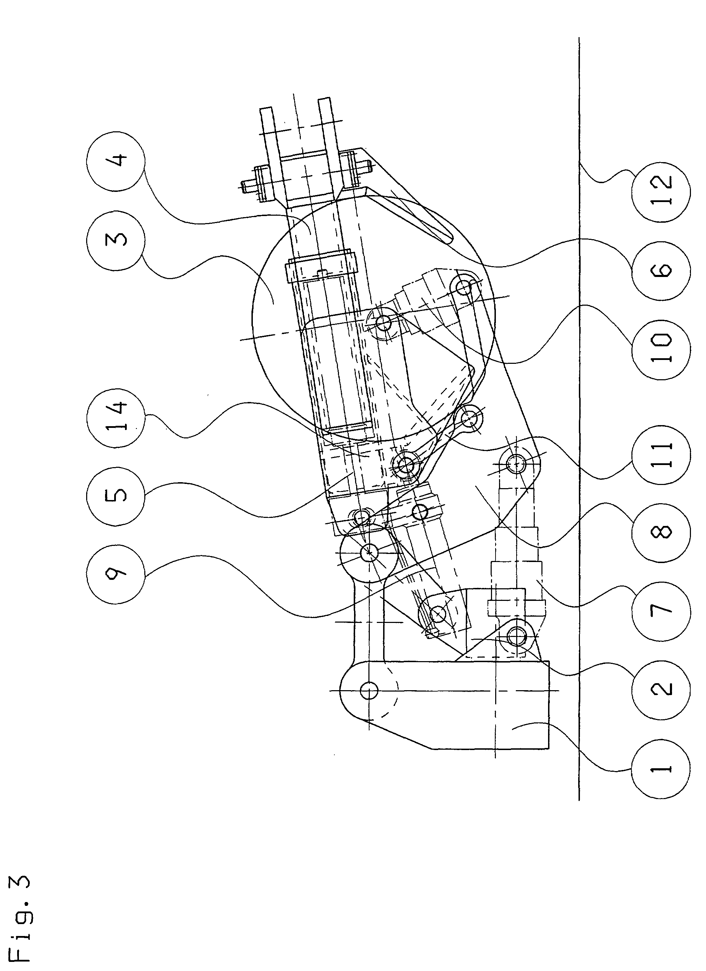

Fig. 3 zeigt den Schwenkprozess der Bugradaufnahmevorrichtung. Dazu drückt der Schwenkzylinder (7) die Aufnahmeplattform (8) nach oben in die Transportstellung. In dieser Stellung kann der Flugzeugschlepper das mit seinen Bugrädern (3) aufgesetzte Flugzeug bugsieren.

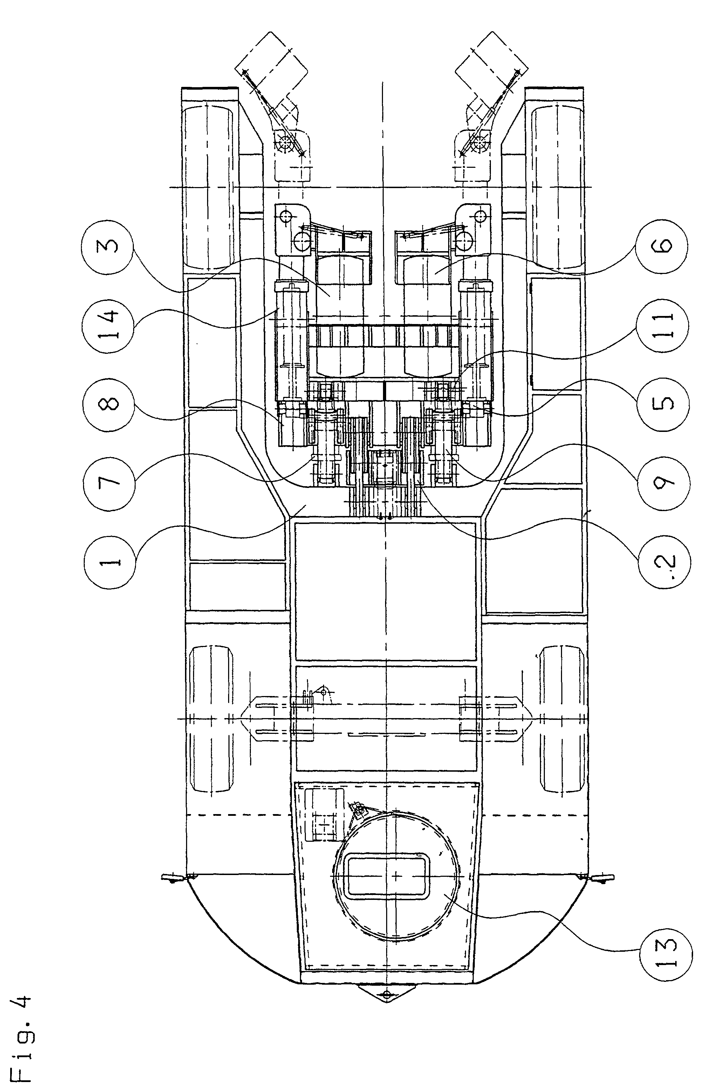

In der Draufsicht gemäß Fig. 4 ist der komplette Flugzeugschlepper schematisch dargestellt. Das Hinterteil des Schleppers weist die Bugradaufnahmevorrichtung mit allen wesentlichen Elementen auf, die bereits in den Figuren 1 bis 3 gezeigt werden. Das Vorderteil des Flugzeugschleppers enthält die Fahrerkabine (13) und den (nicht dargestellten) Fahrantrieb.

Zum Absenken der Bugradaufnahmevorrichtung und zum Herausgeben des Bugfahrwerkes (Bugräder 3) aus der Verspannung werden die zuvor geschilderten Maßnahmen in umgekehrter Reihenfolge durchgeführt.
- 1: Fahrgestellrahmen
- 2: Träger am Fahrgestellrahmen
- 3: Bugräder (Bugfahrwerk) des Flugzeuges
- 4: Teleskoparme
- 5: Teleskopzylinder
- 6: Greifarme an 4
- 7: Schwenkzylinder
- 8: Aufnahmeplattform
- 9: Aufnahmezylinder
- 10: Hubzylinder
- 11: Lenker
- 12: Vorfeld
- 13: Fahrerkabine
- 14: Aufnahmekinematik

## Patentansprüche

1. Schleppfahrzeug mit Räderfahrgestell und eigenem Fahrantrieb zum Bugsieren eines Flugzeuges ohne Schleppstange, wobei das Fahrzeug eine offene U-förmige Ausnehmung aufweist mit einer darin um eine horizontale Achse pendelnd angeordneten Einspann- und Aufnahmevorrichtung für das Bugfahrwerk eines Flugzeuges, wobei an einem über ein Pendellager an einer Quertraverse des Fahrgestellrahmens (1) gelagerten Träger (2), eine Aufnahmevorrichtung angeordnet ist, wobei an der Aufnahmevorrichtung zum Verspannen der Bugräder (3) des Bugfahrwerkes zueinander parallele Teleskoparme (4) mit Teleskopzylindern (5) und an ihren Spitzen einschwenkbar angelenkte Greifarme (6) zum Einspannen der Bugräder (3) zwischen den Greifarmen (6) und einer Aufnahmefläche einer Aufnahmekinematik (14) befestigt sind und zum Schwenken der Aufnahmevorrichtung parallel zueinander Schwenkzylinder (7) angeordnet sind,
**dadurch gekennzeichnet,**
**dass** zum Anheben des eingespannten Bugfahrwerkes (Bugräder 3) auf eine Aufnahmeplattform (8) eine als Parallelogramm gestaltete Hubkinematik, bestehend aus Aufnahmezylindern (9), Hubzylindern (10) und Lenkern (11) vorgesehen ist, wobei die Aufnahmeplattform (8) ohne aktive Höhenregelung einen so großen Abstand zum Boden des Vorfeldes (12) aufweist, dass es zu keiner Berührung der Aufnahmeplattform (8) mit dem Boden des Vorfeldes (12) kommen kann.

## Claims

1. Self-propelled towing vehicle with a wheeled chassis for towing an aircraft without a draw tongue, wherein the vehicle comprises an open U-shaped recess in which a clamping and holding device for the front landing gear of an aircraft is arranged for swinging about a horizontal axis, wherein a holding device is arranged on a support (2) mounted on a transverse member of the chassis frame (1) by means of a self-aligning bearing, wherein, for clamping the nose wheels (3) of the front landing gear, telescopic arms (4), parallel to one another, with telescopic cylinders (5) and gripping arms (6) articulated so as to be pivotable inwardly on the tips of the telescopic arms, are fixed to the holding device for clamping the nose wheels (3) between the gripping arms (6) and a holding surface of a holding mechanism (14) and, for pivoting the holding device, pivoting cylinders (7), parallel to one another, are provided, **characterized in that**, for lifting the clamped front landing gear (nose wheels 3) onto a holding platform (8), a lifting mechanism in the form of a parallelogram, composed of holding cylinders (9), lifting cylinders (10), and connecting rods (11) is provided, wherein the holding platform (8) has, without active height adjustment, a distance from the floor of the apron (12) so great that no contact of the holding platform (8) with the floor of the apron (12) can take place.

## Revendications

1. Véhicule remorqueur avec châssis à roues et système de propulsion particulier destiné à remorquer sans barre de remorquage un avion, pour lequel le véhicule présente un creux ouvert en U avec un dispositif de fixation et de réception qui s'y trouve placé de façon articulée autour d'un axe horizontal pour le train d'atterrissage avant d'un avion, pour lequel un dispositif de réception est placé sur un support (2) logé sur une traverse transversale du cadre de châssis (1) au moyen d'un palier articulé, dispositif de réception sur lequel sont fixés parallèlement l'un à l'autre des bras télescopiques (4) avec des vérins télescopiques (5) destinés à tendre les roues (3) du train d'atterrissage avec sur leurs pointes des bras de prise (6) articulés de façon à pouvoir basculer pour insérer les roues (3) entre les bras de prise (6) et une surface de réception d'un système cinématique de réception (14) et, à effet de basculer le dispositif de réception, des vérins pivotants (7) sont placés parallèlement les uns par rapport aux autres,
**caractérisé en ce que**
pour soulever le train d'atterrissage inséré (roues 3) sur une plateforme de réception (8), on prévoit un système cinématique de levage structuré en parallélogramme composé de vérins de réception (9), de vérins de levage (10) et d'articulations (11), la plateforme de réception (8) sans réglage en hauteur active ayant par rapport au sol de l'aire de stationnement (12) un écart tel qu'il ne peut pas y avoir de contact de la plateforme de réception (8) avec le sol de l'aire de stationnement (12).
